# EUROPEAN PATENT APPLICATION

(11) **EP 2 017 582 A1**
(43) Date of publication of application: **21.01.2009**
(21) Application number: 07425438.4
(22) Date of filing: 18.07.2007
(51) Int. Cl.: G01D 4/00

(54) **System for the controlled supply of services such as electricity, gas, water, etc., and method of management thereof, designed for the purpose of secure, automated remote charging of the corresponding fees**

(71) Applicant: Adm Italia S.r.l. - Advanced Materials Device, 20122 Milano (IT)
(72) Inventor: Valverde, Massimo, 20122 Milano (IT)
(74) Representative: Minoja, Fabrizio

(57) **Abstract**

Disclosed is a system for the controlled supply of services such as electricity, gas and water, with remote automatic charging of the corresponding cost, characterised in that it includes:
• a plurality of junction boxes for a service such as electricity, gas or water, with on-board intelligence, each of which is associated with one or more sockets accessible to users;
• means designed to connect said junction boxes to a control centre managed or controlled by the service provider;
• a plug for each user, fitted with means of connection to said sockets and with a coupling for connection to one or more devices using the service, wherein said unit comprises means designed to identify the user and means designed to exchange information with the devices on the junction boxes;
• means, controlled by said control centre, designed to receive from said boxes information originating from said plug and to activate or refuse the supply of the service, depending on the information received.

## Description

The present invention relates to a system for the controlled supply of services such as electricity, gas, water, etc., and a method of management thereof, designed for the purpose of secure, automatic, remote charging of the corresponding fees.

In particular, the system according to the invention comprises:
- a plurality of devices, hereinafter called "junction boxes", which are buried and/or otherwise positioned in a wholly protected place suitable for the distribution of "tangible" goods/services such as electricity, gas, water, etc., each of which said boxes is associated with one or more sockets that are accessible to the user and equipped with computerised calculation capacity and operational capacity (microcomputer) which is implemented on board thereof (hereinafter called "on-board intelligence");
- means designed to connect said junction boxes to a control centre managed and/or supervised by the service provider;
- means designed to measure locally and in a secure, certifiable way (meters) the total "quantity" of product absorbed by individuals and by all users connected to the individual junction box, and consequently the total quantity of product absorbed and purchased (KW/hour of electricity, cubic metres of gas or water, etc.) by the manager of the distribution network from the manufacturer/supplier of the product, said means being generally duplicated by similar apparatus also present at the manufacturer's/supplier's distribution centre; the invoice for the supply of the product, issued by the manufacturer/supplier of the product to the distributor of the service, and consequently to the individual user as regards the part chargeable to that user, is thus calculated by comparing the data obtained in parallel from the two measurement systems;
- a "plug" in the possession of each user, fitted with means of connection to said sockets originating from the junction box and with one or more multi-standard sockets for connection to one or more user devices wherein said plug comprises means that identify the user and means designed to exchange information with the apparatus installed on the boxes;
- means, controlled by said control centre, designed to receive from said boxes information originating from said plug and to activate or refuse the supply of the service, depending on the information received.

Basically, the system according to the invention is designed to allow the user to access the use and corresponding purchase of "tangible" services via points of simultaneous supply, sale and charging located in any part of Italy and/or abroad, using the "prepaid card" type of payment system, credit cards or other computerised payment systems, which can be recharged, including remotely, in a secure, reliable manner (so that in practice, users carries the means of obtaining an electricity, gas or water supply around "in their pockets").

The following description expressly relates to the case of purchase and subsequent supply of electricity, but the same concepts obviously also apply to the supply of different "tangible" utilities such as water, gas, or the like, while still remaining within the ambit of the invention.

The detailed example of embodiment of the method according to the invention also refers to the supply of electricity, while other possible applications of the invention will be listed at a later stage.

The problem that the invention aims to solve is to allow a plurality of users to access the supply of goods and services without being tied to a specific point of supply, consequently enabling them to access said services anywhere, even occasionally, on paying a fee by credit card, prepaid card or other suitable system.

Traditionally, both tangible and intangible products and services have long been purchased from automatic distributors located in various locations, both indoors and outdoors. Classic examples are automatic dispensers of drinks or fuel or, in the service industry, token-operated telephones and juke-boxes, which have been used for decades, water heaters with timers and launderettes, all of which are devices by means of which it was and is possible, by introducing a coin or token, to make a telephone call, listen to music, obtain hot water (generally for personal hygiene) or wash items of laundry.

To sum up, however, the management of apparatus and devices which allow widespread supply of said products and/or services involves the need for personnel to work not only on their routine maintenance (this being a requirement of any distribution network and consequently, though to a limited extent, of the one described in this patent), but also on replacing the goods used and collecting/depositing the cash inserted in the machines to obtain the product.

Systems which allow goods and/or services to be obtained by means of a prepaid card are also known. The most representative cases are perhaps those of payment of motorway tolls and mobile phone charges, where the user can buy a card in which the amount paid in advance (credit) is stored, and the charge for the service used is deducted from the credit on each occasion.

However, there are still some fields in which the need is "particularly felt" for a well-prepared system that allows users to obtain an intangible product or use a service anywhere (without being tied to a specific point of supply or use), but this possibility is unavailable due to the difficulty associated with charging for services or products supplied automatically at low cost.

In particular, this need is strongly felt in the case of supply of electricity, water, gas and the like.

For example, one of the reasons that limits the widespread use of electric cars is obviously the lack of points of supply distributed all over the country, where users can connect the car to recharge its batteries.

Although it would be very easy to instal electricity supply points in practice, the problem has always arisen of how the user can pay for all the electricity actually supplied without the use of specific personnel.

For this reason, those who now use and/or buy electric cars, for example with a range of 100 km, can drive no further than 50 km from their base, after which they have to return to recharge the batteries, as battery recharging is not available "on the road".

Other examples of the obvious usefulness of being able to obtain an occasional electricity supply at places other than one's "operational base" include refrigerated trucks which, when they park in motorway car parks and lambs, must necessarily keep an auxiliary diesel engine connected to the cooling unit running in order to guarantee constant, correct maintenance of the "cold chain" by maintaining a given temperature of the goods, with evident consequences involving noise and pollution, all of which drawbacks would be almost entirely eliminated if the said cooling unit of the vehicle could easily be connected to the normal mains power supply.

Once again, the difficulty arises of providing such a service in an automated way, at any time of day or night, without hiring specific personnel.

Said problems and other correlated problems, especially those relating to both active and passive safety measures, are remedied by the present invention, which precisely delineates a system for the controlled supply of services such as electricity, gas, water, etc., and a method of management thereof, whereby payment can be made safely and automatically, for example by credit card, prepaid card or other electronic payment system.

The invention will now be described in detail, by way of example but not of limitation, by reference to the annexed figures wherein:
- figure 1 is a block diagram which illustrates the macro-components of the control centre according to the invention;

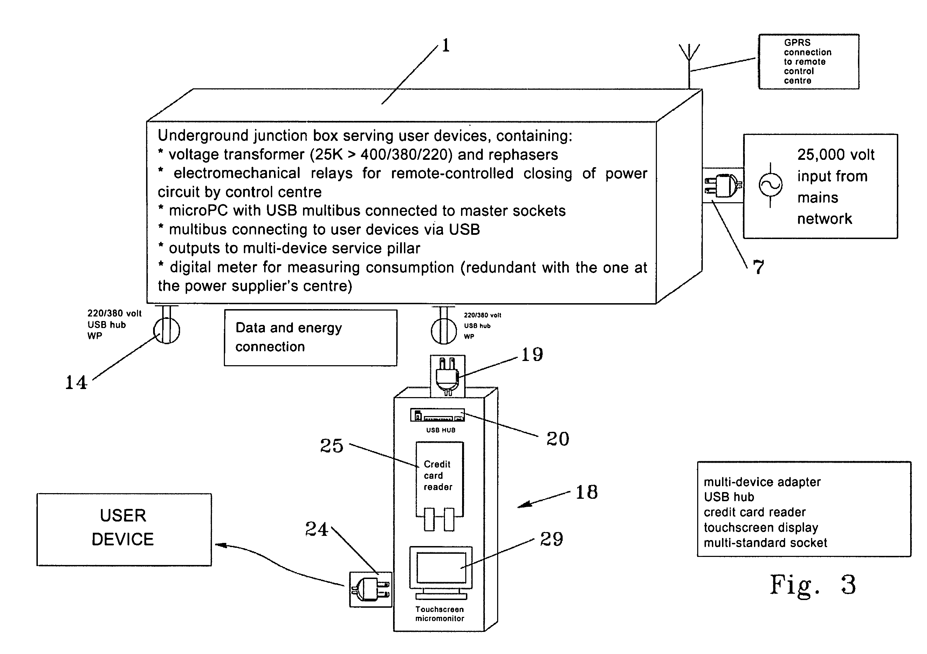

- figures 2, 3 and 4 are block diagrams which illustrate the peripheral and central components of the system according to the invention.

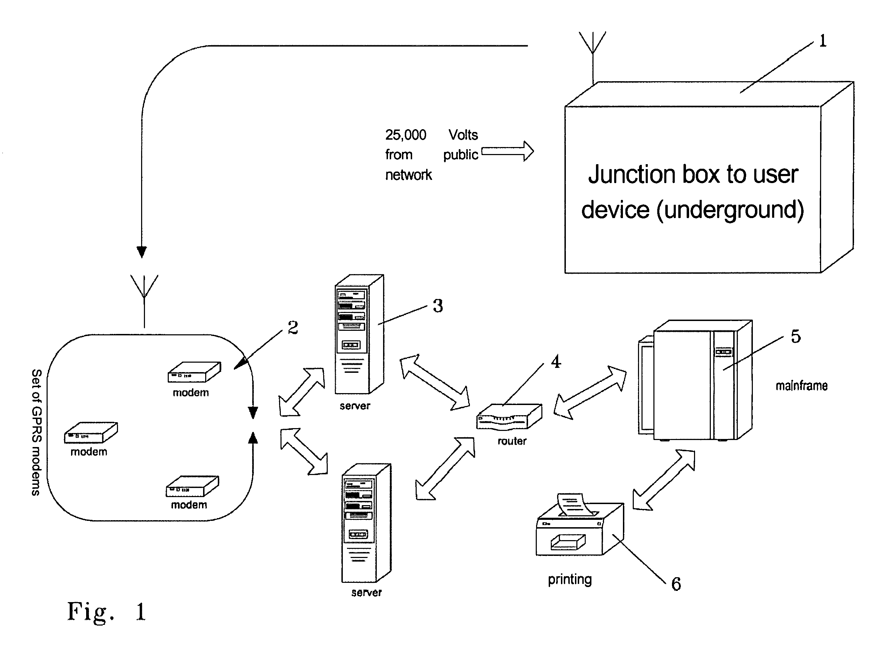

As shown in figure 1, the system comprises a plurality of junction boxes 1, distributed throughout the country and connected via the GPRS/UMTS mobile phone network or the like to a plurality of modems 2, which in turn are connected to a group of servers 3.

The servers are connected, via a router 4, to a mainframe computer 5.

Modem 2 could be connected directly to mainframe computer 5, but the presence of servers with the corresponding router 4 is preferable, because each server dialogues with a number of junction boxes, and only enables connection to the main server when it has performed the required checks on the users who connect to each box.

This reduces the work of the mainframe computer and also introduces greater security, because server 3 and router 4 are each equipped with a specific firewall, the protection of which is added to that given by a further firewall on the mainframe computer, and to some particular features of the program that physically manages the supply of the product purchased, which must necessarily be active and resident both in the junction box and in the "smart" plug/socket unit held by the customer, which will be described in greater detail below.

The latter unit is connected to an automated central "printing and forwarding service" (indicated for the sake of brevity as printer 6), which prints invoices, statements, etc. and forwards them to users/addressees.

Each junction box is consequently connected to "n" sockets or access points, to which users can connect in order to use the service. It should be emphasised that while said sockets are not in use they are never live; consequently, any attempted burglary, theft, vandalism, or mere exploration by a particularly curious child, for example, will have no effect, and will not represent any danger to the health of the person concerned.

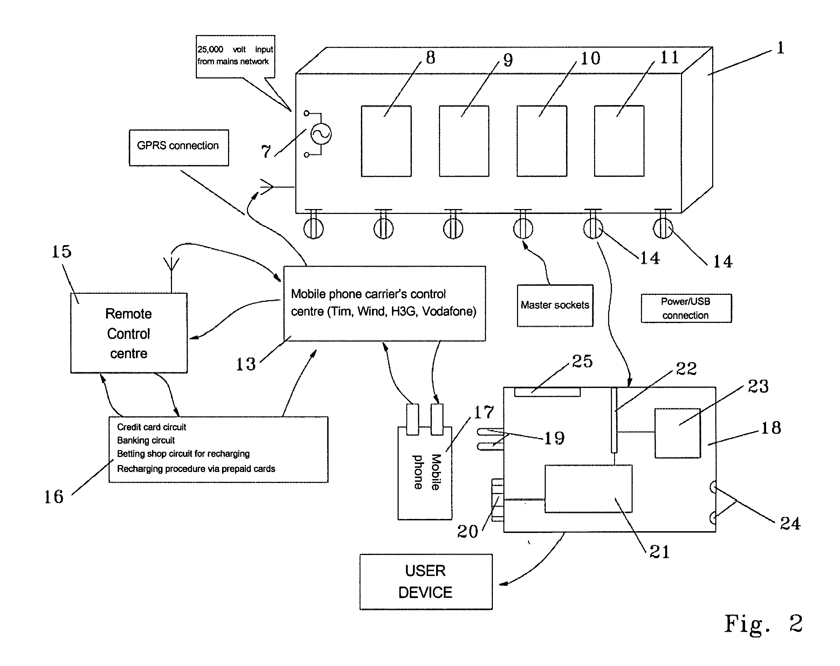

As shown in figure 2, each junction box 1, which is buried and suitably protected against interference, theft, etc., comprises an input 7 for connection to the mains power supply at medium voltage (typically 25,000 volts AC), one or more voltage transformers 8 which convert the final voltage to the value required by the user device (generally 220 / 380 VAC or other required voltage, which may be DC), a plurality of electronic and/or electromechanical relays 9 that close the circuits powering the sockets to which the user connects, each relay being remote-controlled from the control centre via an actuator which is not illustrated because it is of known type, a microprocessor with a multi-bus connected to the user-accessible sockets via a communication port, which may be the USB, RS 232 or IEEE 1394 type, etc., connected to the control centre via a modem 11 operating on the GPRS/UMTS mobile phone network or the like, and a transmission device 12 for connection (again via the GPRS/UMTS mobile phone network or the like) to a telephone carrier's control centre 13.

No. 14 indicates a plurality of sockets accessible by the user for the purpose of using the service.

Each of said sockets, designed to receive a plug which also forms the subject of the invention and will be described below, comprises a power takeoff 19 for the supply of the service (in this specific case for the supply of electricity), and a data transfer connection 20.

The telephone carrier's control centre 13 is connected to the service provider's control centre 15, which in turn is connected to the classic payment circuits 16 such as the proprietary circuits of the credit card management service (e.g. Visa, CartaSi, American Express, Diners Club, etc.), the banking circuit, the prepaid card recharging circuit, the lottery betting office circuit, etc.

The telephone carrier's control centre 13 is obviously also connected to the user's mobile phone 17.

As stated, each socket 14 is designed to receive a particular metal-covered, waterproof plug 18, complete with the corresponding retainers to prevent the plug from being accidentally pulled out by the user, and a watertight collar which runs along the cable of the device for a few centimetres.

Plug 18 is fitted on one side a suitable power takeoff 19 for the supply and transfer of electricity combined with an adjacent USB, RS 232, IEEE 1394 or S400 connection or the like, connected via its own bus to a microprocessor 21 housed in said plug with the corresponding peripherals (waterproof microdisplay), and also contains the ROM with the inaccessible data of the user who interfaces with the microprocessor on the junction box via a USB, RS 232, IEEE 1394 or S400 connection, or the like. Said plug is also fitted with a touchscreen display 25, a slot 22 for the insertion of a credit card which is read by a reader 23 of known type and finally, on the opposite side to connections 19 and 20, a multi-standard socket 24 to which the user connects the device(s).

The operation of the system will now be described.

In operational terms, the customer is immediately detected through the data initially exchanged between plug 18 and junction box 1 which, immediately after the connection and on first receipt of the user's data, connects via a mobile phone network (GPRS/UMTS or the like) to control centre 15, and sends the customer's details to the system; once the user has been "recognised" by the system, it responds by sending a confirmation message to the display of the plug, containing the customer's identifying data, the remaining credit and a request to the user to confirm the data by entering a PIN number. When the PIN number has been entered and checked, all the parameters have been checked and the existence of credit has been confirmed, the centre enables closing of the power circuit present in the junction box to initiate the supply; it also records, both locally and in the memory of plug 18, the date and time when the connection begins and ends, the type of energy requested (single-phase or three-phase voltage, average amp limit and peak reached, electrical compliance of the earthing system, etc.), the volume of energy supplied, the remaining credit, and an estimate of when it will run out, calculated on the basis of the average supply currently being delivered; it also records a series of security data relating to the individual supply which are required to protect the supply and the user's credit.

Users consequently have a portable plug allowing them to carry electricity around "in their pocket" (or a similar fixed device for household use, in which case the junction box could be positioned near the main control board of the building), via which they connect to socket 18.

Users can check their existing credit at the service provider's control centre using a classic, specific prepaid card by two simple, extensively tested methods, namely:
- by sending their user number, PIN and the secret code concealed in the prepaid card to an automated Freefone number (via a landline or mobile phone)
- by inserting a credit card (either conventional or prepaid, such as the "PostePay^{®}" card) in slot 22 of plug 18, and enabling microprocessor 21 to connect to the credit card circuit via microdisplay 25 to request authorisation to debit the sum selected; confirmation of the transaction is then sent to the user's mobile phone, in accordance with the well-established practice of the major credit card circuits.

The control centre is always able to manage every technical aspect of each of said payment configurations and all the operational possibilities allowed by knowledge of the machine code of the microprocessor installed in socket 18 and the IMEI code of the GPRS/UMTS or similar modem installed in junction box 1, and of the serial number and corresponding telephone number assigned to the SIM card of the junction box, and consequently to establish precisely the physical and/or tax identity of the user, and the time, quantity, amount and geographical location of the point at which the service is supplied. On the basis of these data, the system will also be able to provide the customer with a final invoice showing credits, consumption and correlated taxes, sent either on hard copy by ordinary mail to the address indicated by the customer, or electronically to its e-mail address.

When the system knows the machine code of the microprocessor on plug 18, the customer's PIN number, the PUK code, the IMEI code of the GPRS/UMTS or similar modem on the junction box, and the serial number and corresponding telephone number assigned to the SIM card of the junction box, exactly as in the case of credit cards and as for any mobile phone, the customer can remove its plug 18 at any time, thus completely blocking all supplies to that specific plug and achieving total "portability" of energy credit, which can be used at any other time, through the same plug, at any other socket 14, provided that the entire connection and checking procedure is correctly performed.

Moreover, this application allows continuous monitoring of the geographical location of the user device and the user's safety and traceability; in the case of refrigerator trucks, for example, it allows precise evaluation of the route, current absorption and consequently the level of operation of the cooling unit, etc.

From the standpoint of the service provider, once all the legislative requirements have been met, the invention allows the carrier to obtain payment in advance, in cash (real and/or virtual), of all charges for the supply, instal a practically infinite number of supply points at a highly acceptable cost, and minimise disputes and the personnel required for the global management of supplies.

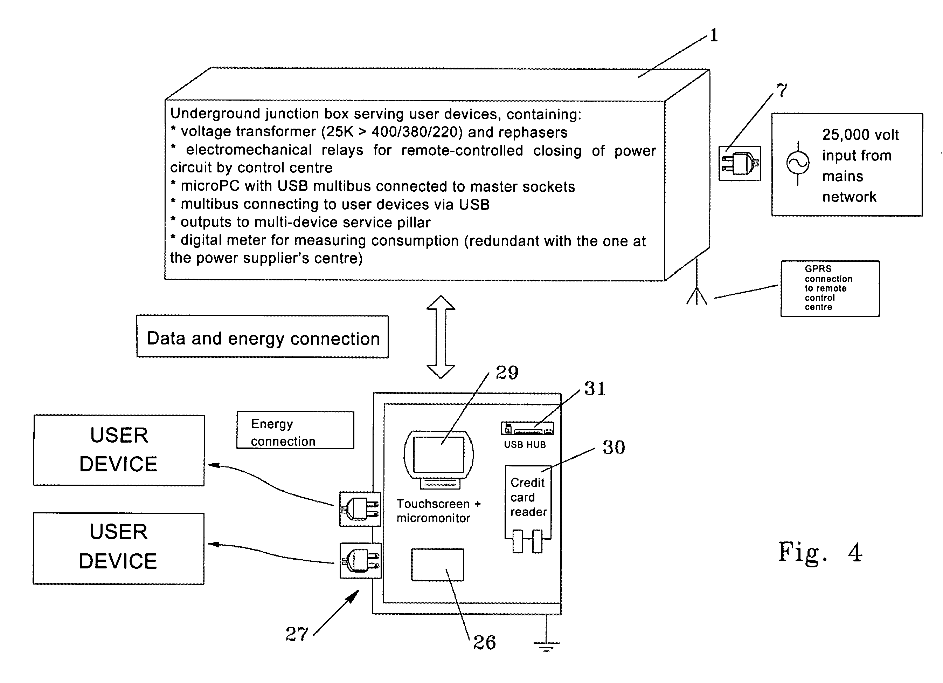

Figure 4 shows the electricity distribution diagram according to a further preferred embodiment of the invention, which provides for the use of multi-device service pillars instead of plugs.

In this case, control unit 1 is connected to a service pillar 26 fitted with a plurality of sockets 27, to each of-which an end user can be connected.

The service pillar is fitted with a microprocessor 28, a display 29, preferably the touchscreen type, a credit card reader 30, and a series of data connections 31, which may be the USB, RS 232, IEEE 1394 or S400 type, etc.

In this case, the user connects the ordinary plug of its appliance to the service pillars and inserts into the slot provided a document such as a credit card containing a microchip with the identifying numbers and information, or a specific non-volatile memory similar to the well-known USB pen drives, after which s/he interacts with the control unit via display 29 (or a keyboard) to enter the PIN and any codes required to enable the supply. This embodiment of the system forming the subject of the patent could also include the simultaneous presence in the service pillar of a parking meter connected to the system and dedicated to receiving vehicle parking charges; in the case of "non-electric" vehicles, the system would merely make the charge and transfer the corresponding electronic credit (or part of it) to the local council or car park owner, while in the case of electric vehicles a new "park & recharge" service could be offered which, as stated below, could be structured so that users of the recharging service are not required to pay a parking charge, in order to encourage their use.

In addition to the example of electricity supply, the system according to the invention could effectively be applied to numerous other sectors, including, by way of example, those listed below.

Urban and non-urban parking areas on roads and motorways (possibly with a drinking water supply), equipped for the supply of the electricity required to recharge the accumulators of any type of electrical, hybrid vehicle etc.
- electrical vehicles (industrial vehicles such as forklift trucks, etc., vans and small trucks for various logistical uses (e.g. post office and/or collection/delivery vehicles) in towns and for short distances outside town, taxis and collective vehicles, refrigerator trucks and/or freight trucks requiring a constant temperature, etc.
- camp sites, holiday resorts, mountain refuges and hostels (electricity, gas and drinking water),
- building sites of any type and nature (construction, industrial, etc.) (electricity, gas, drinking water and non-drinking water),
- residential accommodation, second homes, holiday homes, rented premises for both short and long periods (gas, electricity and drinking water),
- circuses, fairgrounds and the like (electricity and drinking water),
- walkers, campers and camper van users (electricity, gas and drinking water),
- social, artistic, folk and sporting events and exhibitions on both private and public sites and/or not supplied with the usual utilities (electricity and drinking water),
- single-family and condominium heating installations (electricity and/or gas),
- hydraulic installations and devices for civil, industrial and agricultural use,
- trade fairs organised either occasionally or regularly in specifically equipped areas (permanent fair halls) or occasionally prepared areas (electricity and drinking water),
- street markets and/or similar systems for the direct sale to the public of consumer goods and products (electricity and drinking water),
- outdoor and indoor exhibitions (electricity and drinking water),
- nature reserves (electricity and drinking water),
- mobile cafeterias (electricity and drinking water).

The basic concept of the system described is that a standardised, reliable source of electricity is available at all times and places (including abroad), the largest possible number of supply installations being dematerialised, downsized, distributed and standardised.

In practice, the electricity (or water or gas) supply can be rendered portable, exactly like telecommunications with the activation of the mobile phone network (consequently offering the possibility of using a roaming service when abroad). Its introduction would require the construction of a new network of underground electrical installations at a low structural cost, and in exchange could supply with electricity a large number of users who would otherwise have no incentive to use it (for example, widespread urban use of individual and/or collective vehicles powered by electricity, which would have a relatively modest environmental impact), and possibly make available a very wide range of additional services, which have yet to be exhaustively explored.

The entire operating, control and distribution logic is the same for each type of supply (electricity, gas and drinking water), and is always resident in the underground junction box.

"Roadside" installation of a "smart" socket as described above, connected on one side to the underground junction box and on the other to the plug of the portable adapter, could be effected, for example, by building said socket into a small compartment protected by a retractable metal cover or an axial rotation mechanism with concentric metal balls fitted with a return spring, the assembly being placed on the horizontal edge of the pavement (as is usually the case with the small round manholes used for road access to gas and water gate valves) or in the vertical and/or horizontal thickness of the kerb; this procedure could represent a low-cost solution with very low environmental impact, and would always guarantee a new type of embodiment of the "park & recharge" service reserved for electric vehicles circulating in urban and/or suburban areas (where, for example, in order to advise to their use, the Councils of the city in issue that could renounce to the direct and simultaneous payment of a monetary tax for parking, tax for parking that could however be demanded using the operating technical chain that already forms the argument of this licence and, on more, still other services that they could be develop later through the same net).

An expert in the field could devise various modifications and variations, all of which should be deemed to fall within the ambit of this invention.

## Claims

1. System for the controlled supply of services such as electricity, gas and water, with remote, automatic charging of the cost thereof, **characterised in that** it includes:
• a plurality of junction boxes supplying a service such as electricity, gas or water, with on-board intelligence, each of which is associated with one or more sockets accessible to the user;
• means designed to connect said junction boxes to a control centre managed or controlled by the service provider;
• a plug/socket unit provided to each user, fitted with means of connection to said sockets and a coupling for connection to one or more devices using the service, wherein said unit includes means designed to identify the user and means designed to exchange information with the devices fitted on the junction boxes;
• means, controlled by said control centre, which are designed to receive from said boxes information originating from said plug and to activate or refuse the supply of the service, depending on the information received.

2. System for the controlled supply of services as claimed in claim 1, **characterised in that** means designed to store a prepaid credit can be provided at the supplier's control centre or in said plug.

3. System as claimed in claim 2, **characterised in that** said plug is fitted with means designed to store the user's identifying data, means enabling the system to read and dialogue with the microprocessor installed in a credit card, and means designed to receive a code entered by the user which validates the operation (e.g. energy supply).

4. System as claimed in claim 3, **characterised in that** said means designed to receive a code from the user are constituted by a "touchscreen" display.

5. System as claimed in any of the preceding claims, **characterised in that** it includes means designed to connect each of said junction boxes (or possibly each "plug/socket" unit) with said control centre via a telephone connection operating on a mobile phone network such as GPRS/UMTS or the like.

6. System as claimed in claim 1, **characterised in that** it includes:
• a plurality of junction boxes for a service such as electricity, gas or water (and, for example, the possibility of charging a fee for the time during which users leave their vehicles parked in a given area), each of which is equipped with on-board intelligence and associated with one or more sockets accessible to users;
• a plurality of servers connected to said junction boxes via a plurality of modems of the GPRS/UMTS type or the like;
• a mainframe connected via a router to said servers.

7. System as claimed in any of the preceding claims, **characterised in that** each of said junction boxes comprises:
• an input designed to connect the public utility (electricity, water, gas) distribution network to the junction box;
• a system for transformation and rectification of the voltage (from AC to DC where required);
• devices designed to close a circuit in order to place said user-accessible sockets in communication with the output of said voltage transformer;
• a plurality of sockets accessible to users;
• a microcomputer connected to the control centre via the mobile phone network with the aid of a modem equipped with a "datas only service" SIM card;
• a plurality of interfaces designed to place said micro-computer in communication with said user-accessible sockets.

8. System as claimed in claims 1 and 7, **characterised in that** said plugs designed to allow users to connect to said sockets comprise:
• a multi-device adapter designed to allow the connection of the plug (of any type or standard) to said user-accessible sockets;
• an interface designed to connect said plug to the junction box for data transfer purposes;
• a credit card reader;
• means for displaying the information entered or received;
• means designed to input a code into said junction box via said plug.

9. Method for the reliable, controlled supply of services such as electricity, gas and water, with remote, automated charging of the corresponding fees, the supply service being effected with apparatus installed all over the country, fitted with a coupling for connection of a user device and means designed to connect said points of supply with a control centre managed by the service provider, **characterised in that** it includes:
• insertion of a connection device, in which the identifying data of a specific user are stored, into a socket fitted on said points of supply;
• reading of the user's data by an intelligence present in said point of supply;
• sending of the data to said control centre;
• check on the user's identifying data and credit;
• notification to the point of supply that the supply of the service is enabled;
• closing, controlled by said control centre, of a circuit which allows the supply of the service;
• storage of all data relating to said supply both at the control centre and in said device held by the customer.
